# FASCICULE DE BREVET EUROPEEN

(11) **EP 3 306 834 B1**
(45) Date de publication et mention de la délivrance du brevet: **10.07.2019**
(21) Numéro de dépôt: 17194828.4
(22) Date de dépôt: 04.10.2017
(51) Int. Cl.: H04B 10/116

(54) **VÉHICULE FERROVIAIRE COMPORTANT UN DISPOSITIF DE COMMUNICATION DE DONNÉES**
SCHIENENFAHRZEUG, DAS MIT EINER DATENKOMMUNIKATIONSVORRICHTUNG AUSGESTATTET IST
A RAILWAY VEHICLE HAVING A DATA TRANSMITTING DEVICE

(30) Priorité: 06.10.2016 FR 1659640
(43) Date de publication de la demande: 11.04.2018
(73) Titulaire: ALSTOM Transport Technologies, 93400 Saint-Ouen (FR)
(72) Inventeur: GLUMINEAU, Antoine, 17140 Lagord (FR); REINERT, Loïc, 17220 Salles-sur-Mer (FR)
(74) Mandataire: Lavoix

(56) Documents cités:
- JP-B1- 6 001 128
- Anonymous: "La e.newsletter de SNCF Réseau Ingénierie et Projets", , 31 mai 2016 (2016-05-31), XP055379308, Extrait de l'Internet: URL:http://www.ingenews.sncf.fr/innovation -recherche.html [extrait le 2017-06-07]
- Amritpal Kaur: "Recent Encroachment In Optical Fiber Communication-Visible Light Communication (LI-FI)", International Journal of Innovative Science, Engineering & Technology Issue, 1 octobre 2015 (2015-10-01), XP055378854, Extrait de l'Internet: URL:ijiset.com/vol2/v2s10/IJISET_V2_I10_10 .pdf [extrait le 2017-06-06]
- "SFH 7773 (IR-LED + Proximity Sensor + Ambient Light Sensor) Application note preliminary", , 12 December 2011 (2011-12-12), XP055111379, Retrieved from the Internet: URL:http://www.mouser.com/pdfdocs/OSRAM_SF H_7773_ES6_1_AppNote_v9_final.pdf [retrieved on 2014-04-01]

## Description

La présente invention concerne un véhicule ferroviaire, notamment un tramway, comportant un dispositif de communication de données avec un serveur de communication externe au véhicule ferroviaire.

Il est généralement nécessaire pour un véhicule ferroviaire, notamment un tramway, de transmettre des données à un serveur externe, par exemple en vue du stockage des données.

Par exemple, des vidéos surveillances du véhicule sont chaque soir transmises et stockées sur un serveur externe.

Cette transmission des données est réalisée par des moyens de communication sans fil, notamment par technologie Wi-Fi. Toutefois, une telle transmission par technologie Wi-Fi n'est pas toujours satisfaisante, notamment en termes de débit.

On connait déjà, dans l'état de la technique, notament d'après le document « La e.newsletter de SNCF Réseau Ingénierie et Projets », XP055379308, un procédé de communication entre un véhicule ferroviaire et un terminal de communication externe au véhicule ferroviaire.

L'invention a notamment pour but d'améliorer la situation, en proposant un véhicule ferroviaire muni d'un dispositif de communication de données dont le débit est supérieur à celui pouvant être atteint par une technologie Wi-Fi grâce à son émission très directive, tout en conservant un mode de communication sans fil.

A cet effet, l'invention a notamment pour objet un procédé de communication selon la revendication 1.

La technologie Li-Fi (ou Light Fidelity), connue en soi, utilise les ondes de lumière visible plutôt que les ondes radio du spectre élecromagnétique. Le principe du Li-Fi repose sur le codage et l'envoi de données via la modulation d'amplitude des sources de lumière (scintillation imperceptible à l'oeil), selon un protocole bien défini et standardisé.

La lumière peut être facilement modulée à très grande vitesse, ce qui permet d'atteindre des débits élevés sans utiliser de techniques complexes. En particulier, le débit atteint est très supérieur à un débit de transmission par technologie Wi-Fi.

D'autres avantages de l'invention sont à noter. En particulier, la technologie Li-Fi consiste en une transmission directe, si bien qu'elle ne peut être interceptée par un piratage informatique.

Un procédé selon l'invention peut comporter en outre l'une ou plusieurs des caractéristiques suivantes, prises seules ou selon toutes combinaisons techniquement envisageables.
- Les premiers moyens de transmission comportent une première lampe de transmission de signaux lumineux selon une technologie Li-Fi, des premiers moyens d'encodage de données numériques en signal électrique, et des premiers moyens de commande de la première lampe de transmission, propres à convertir le signal électrique en signal lumineux en commandant la source lumineuse de la première lampe de transmission.
- La première lampe de transmission est agencée à une extrémité du véhicule ferroviaire, et remplit en outre une fonction d'éclairage.
- La première lampe de transmission comporte au moins une diode électroluminescente.
- Le dispositif de communication comporte un premier photorécepteur, des premiers moyens de conversion de signaux lumineux reçus par le photorécepteur en signaux électriques, et des premiers moyens de décodage des signaux électriques en données numériques.

L'invention concerne également un système de communication de données entre un véhicule ferroviaire tel que défini précédemment, et un terminal de communication, caractérisé en ce que le terminal de communication comporte un second photorécepteur, des seconds moyens de conversion de signaux lumineux reçus par le second photorécepteur en signaux électriques, et des seconds moyens de décodage des signaux électriques en données numériques.

Un système de communication selon l'invention peut comporter en outre l'une ou plusieurs des caractéristiques suivantes, prises seules ou selon toutes combinaisons techniquement envisageables.
- Le terminal de communication comporte des seconds moyens de transmission de signaux lumineux selon une technologie Li-Fi.
- Le terminal de communication comporte des moyens de stockage de données numériques.

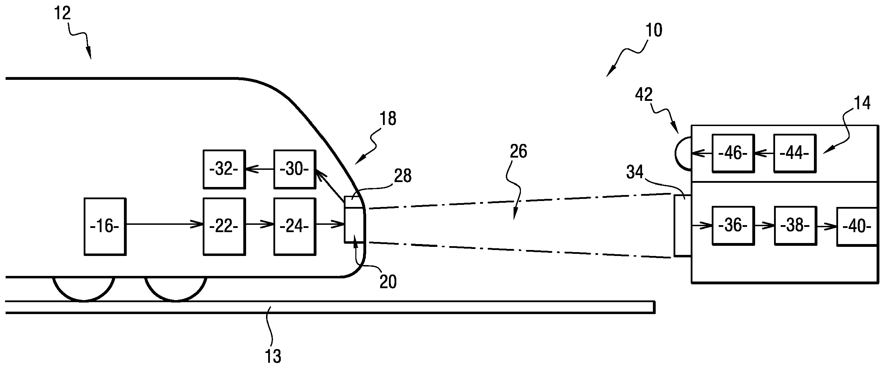

L'invention sera mieux comprise à la lecture de la description qui va suivre, donnée uniquement à titre d'exemple et faite en se référant à la figure annexée représentant schématiquement un système de communication selon un exemple de mode de réalisation de l'invention.

On a représenté, sur la figure, un système de communication 10 selon un exemple de mode de réalisation de l'invention, entre un véhicule ferroviaire 12 représenté partiellement, et un terminal de communication 14.

Le véhicule ferroviaire 12 est de tout type envisageable, par exemple urbain, notamment un tramway ou un métro, et circule sur une voie ferrée 13.

Le terminal de communication 14 est par exemple agencé en fin de voie ferrée 13, notamment sur une voie de garage.

Il est à noter qu'un réseau ferroviaire, sur lequel circule une pluralité de véhicules ferroviaires 12, comporte de préférence une pluralité de terminaux de communication 14. Chaque véhicule ferroviaire 12 est alors compatible avec chaque terminal de communication 14.

Le véhicule ferroviaire 12 comporte une unité 16 de stockage de données numériques. Les données numériques comportent par exemple des vidéos de surveillance enregistrées dans le véhicule 12 de manière classique par des caméras numériques prévues à cet effet, ou des données de comptage des passagers validant leur titre de transport dans le véhicule ferroviaire 12. Toutes autres données numériques employées dans le cadre de l'utilisation d'un véhicule ferroviaire sont envisageables.

Le véhicule ferroviaire 12 comporte par ailleurs au moins un dispositif 18 de communication de données avec le terminal de communication 14, agencé en extrémité du véhicule ferroviaire 12. Par exemple, le véhicule ferroviaire 12 comporte deux dispositif de communication 18, agencés chacun à une extrémité respective du véhicule 12.

Le dispositif de communication 18 comporte des premiers moyens de transmission de signaux lumineux selon une technologie Li-Fi, comportant par exemple une première lampe 20 de transmission de signaux lumineux selon une technologie Li-Fi.

Avantageusement, la première lampe de transmission 20 est agencée à l'avant/arrière du véhicule ferroviaire 12, et remplit en outre une fonction d'éclairage avant/arrière du véhicule ferroviaire 12. En d'autres termes, cette lampe de transmission 20 est la lampe utilisée pour l'éclairage lors du service du véhicule ferroviaire 12.

La première lampe de transmission 20 comporte au moins une diode électroluminescente, et de préférence une pluralité de diodes électroluminescentes.

Le dispositif de communication 18 comporte par ailleurs des premiers moyens 22 d'encodage de données numériques, issues de l'unité de stockage 16, en signal électrique.

Le dispositif de communication 18 comporte également des premiers moyens 24 de commande de la lampe de transmission 20, propres à convertir le signal électrique en un signal lumineux 26, en commandant la source lumineuse de la première lampe de transmission 20, et plus particulièrement des diodes électroluminescentes.

Ainsi, le dispositif de communication 18 convertit les données numériques de l'unité de stockage 16 en signal lumineux 26 en vue de la transmission de ce signal lumineux 26 au terminal de communication 14.

Avantageusement, le dispositif de communication 18 comporte par ailleurs un premier photorécepteur 28, par exemple agencé à proximité de la lampe de transmission 20, des premiers moyens 30 de conversion de signaux lumineux reçus par le photorécepteur 28 en signaux électriques, et des premiers moyens 32 de décodage des signaux électriques en données numériques.

Le terminal de communication 14 comporte un second photorécepteur 34, des seconds moyens 36 de conversion de signaux lumineux 26 reçus par le second photorécepteur 34 en signaux électriques, et des seconds moyens 38 de décodage des signaux électriques en données numériques. Il comporte également une seconde unité 40 de stockage de données numériques.

Avantageusement, le terminal de communication 14 comporte des seconds moyens de transmission de signaux lumineux selon une technologie Li-Fi, comportant par exemple une seconde lampe 42 de transmission de signaux lumineux selon une technologie Li-Fi. La seconde lampe de transmission 42 comporte au moins une diode électroluminescente, et de préférence une pluralité de diodes électroluminescentes.

Le terminal de communication 14 comporte alors par ailleurs des seconds moyens 44 d'encodage de données numériques, en signal électrique.

Le terminal de communication 14 comporte également des seconds moyens 46 de commande de la seconde lampe de transmission 42, propres à convertir le signal électrique en un signal lumineux, en commandant la source lumineuse de la seconde lampe de transmission 42, et plus particulièrement de ses diodes électroluminescentes.

Le système de communication 10 permet de réaliser un procédé de communication qui va maintenant être décrit.

Ce procédé de communication est effectué lors de l'arrivée du véhicule ferroviaire 12 à proximité du terminal de communication 14, par exemple en fin de service.

Le véhicule ferroviaire 12 est alors détecté à proximité du terminal de communication 14. Par exemple, le terminal de communication 14 comporte un capteur de lumière détectant lorsque l'intensité lumineuse dépasse un seuil prédéfini, pour en déduire la présence du véhicule ferroviaire. Le capteur de lumière est par exemple formé par le second photorécepteur 34.

En variante le véhicule ferroviaire détecte la présence du terminal de communication et initialise une communication avec le terminal de communication sur la base d'un protocole de communication particulier, via par exemple la demande d'une adresse IP, via le lien Li-Fi, à un DHCP installé dans le terminal de communication.

Le procédé comporte alors l'encodage des données numériques à transmettre, se trouvant dans la première unité de stockage 16, en signal électrique. Cet encodage est réalisé par les premiers moyens d'encodage 22.

Le procédé comporte ensuite la conversion du signal électrique en signal lumineux, en commandant l'intensité lumineuse de la première lampe de transmission 20. Cette conversion est réalisée par les premiers moyens de commande 24.

Le signal lumineux 26 est alors transmis, par la première lampe 20 et reçu par le second photorécepteur 34.

Les signaux lumineux reçus sont convertis par les moyens de conversion 36 en signaux électriques.

Enfin, les seconds moyens de décodage 38 décodent les signaux électriques en données numériques, qui sont ensuite stockés dans la seconde unité de stockage 40.

On notera que, le terminal de communication 40 comprenant également une lampe 42, et le dispositif de communication 18 comprenant également un photorécepteur 28, il est possible de transmettre également des données depuis le terminal de communication 40 vers le dispositif de communication 18, par un procédé similaire à celui décrit précédemment.

Avantageusement les données numériques sont encodées sous forme de trames par les premiers moyens d'encodage 22 et le terminal de communication 40 acquitte la réception de chaque trame via la transmission de données d'acquittement au dispositif de communication 18. La communication mise en oeuvre entre le dispositif de communication 18 et le terminal de communication 40 est donc bidirectionnelle.

En variante, la communication depuis le terminal de communication 40 vers le dispositif de communication est assurée via une liaison de communication conforme au protocole WIFI. La réception de chaque trame transmise depuis le dispositif de communication vers le terminal de communication 40 est donc acquittée à l'aide de données d'acquittement transmise par un message WIFI.

Il est également à noter que l'invention permet la transmission de données entre deux véhicules ferroviaires 12, depuis la lampe de transmission 20 de l'un vers le premier photorécepteur 28 de l'autre. Une telle transmission de données est par exemple effectuée entre deux véhicules ferroviaires circulant successivement sur la même voie ou accouplés en Unité-Multiple, ou entre deux véhicules ferroviaires se croisant.

## Revendications

1. Procédé de communication au moyen d'un système de communication (10) de données entre un véhicule ferroviaire (12) et un terminal de communication (14) externe au véhicule ferroviaire (12), dans lequel :
- le véhicule ferroviaire (12) comporte un dispositif (18) de communication de données avec le terminal de communication (14), le dispositif de communication de données (18) comportant des premiers moyens (20, 22, 24) de transmission de signaux lumineux (26) selon une technologie Li-Fi,
- le terminal de communication (14) comporte un second photorécepteur (34), des seconds moyens (36) de conversion de signaux lumineux reçus par le second photorécepteur (34) en signaux électriques, et des seconds moyens (38) de décodage des signaux électriques en données numériques.
- le terminal de communication (14) comporte des seconds moyens (42, 44, 46) de transmission de signaux lumineux selon une technologie Li-Fi,
le procédé de communication comportant :
- l'arrivée du véhicule ferroviaire (12) à proximité du terminal de communication (14),
- la transmission de signaux lumineux (26) par les premiers moyens de transmission (20, 22, 24),
- la réception des signaux lumineux (26) par le second photorécepteur (34),
- la conversion des signaux lumineux reçus par le second photorécepteur (34) en signaux électriques, et
- le décodage des signaux électriques en données numériques,
**caractérisé en ce que** le procédé comporte, suite à l'arrivée du véhicule ferroviaire (12) à proximité du terminal de communication (14), et préalablement à la transmission de signaux lumineux (26) par les premiers moyens de transmission (20, 22, 24), la détection du véhicule ferroviaire (12) par le terminal de communication (14), cette détection du véhicule ferroviaire étant réalisée au moyen du second photorécepteur (34), lorsque l'intensité lumineuse détectée par ce second photorécepteur (34) dépasse un seuil prédéfini.

2. Procédé de communication selon la revendication 1, dans lequel les premiers moyens de transmission comportent :
- une première lampe (20) de transmission de signaux lumineux (26) selon une technologie Li-Fi,
- des premiers moyens (22) d'encodage de données numériques en signal électrique,
- des premiers moyens (24) de commande de la première lampe de transmission (20), propres à convertir le signal électrique en signal lumineux (26) en commandant la source lumineuse de la première lampe de transmission (20).

3. Procédé de communication selon la revendication 2, dans lequel la première lampe de transmission (20) est agencée à une extrémité du véhicule ferroviaire (12), et remplit en outre une fonction d'éclairage.

4. Procédé de communication selon la revendication 2 ou 3, dans lequel la première lampe de transmission (20) comporte au moins une diode électroluminescente.

5. Procédé de communication selon l'une quelconque des revendications précédentes, dans lequel le dispositif de communication (18) comporte un premier photorécepteur (28), des premiers moyens (30) de conversion de signaux lumineux reçus par le photorécepteur en signaux électriques, et des premiers moyens (32) de décodage des signaux électriques en données numériques.

6. Procédé de communication selon l'une quelconque des revendications précédentes, dans lequel le terminal de communication (14) comporte des moyens (40) de stockage de données numériques.

## Patentansprüche

1. Verfahren für die Kommunikation mittels eines Datenkommunikationssystems (10) zwischen einem Schienenfahrzeug (12) und einem Kommunikationsendgerät (14) außerhalb des Schienenfahrzeugs (12), wobei:
- das Schienenfahrzeug (12) eine Vorrichtung (18) für die Datenkommunikation mit dem Kommunikationsendgerät (14) enthält, wobei die Datenkommunikationsvorrichtung (18) erste Mittel (20, 22, 24) zum Senden von Lichtsignalen (26) gemäß einer Li-Fi-Technik enthält,
- das Kommunikationsendgerät (14) einen zweiten Photoempfänger (34), zweite Mittel (36) zum Umsetzen von von dem zweiten Photoempfänger (34) empfangenen Lichtsignalen in elektrische Signale und zweite Mittel (38) zum Decodieren der elektrischen Signale in digitale Daten enthält und
- das Kommunikationsendgerät (14) zweite Mittel (42, 44, 46) zum Senden von Lichtsignalen gemäß einer Li-Fi-Technik enthält,
wobei das Kommunikationsverfahren Folgendes umfasst:
- Annähern des Schienenfahrzeugs (12) an eine Umgebung des Kommunikationsendgeräts (14),
- Senden von Lichtsignalen (26) durch die ersten Sendemittel (20, 22, 24),
- Empfangen der Lichtsignale (26) durch den zweiten Photoempfänger (34),
- Umsetzen der von dem zweiten Photoempfänger (34) empfangenen Lichtsignale in elektrische Signale und
- Decodieren der elektrischen Signale in digitale Daten,
**dadurch gekennzeichnet, dass** das Verfahren nach dem Annähern des Schienenfahrzeugs (12) an die Umgebung des Kommunikationsendgeräts (14) und vor dem Senden der Lichtsignale (26) durch die ersten Sendemittel (20, 22, 24) das Detektieren des Schienenfahrzeugs (12) durch das Kommunikationsendgerät (14) umfasst, wobei diese Detektion des Schienenfahrzeugs mittels des zweiten Photoempfängers (34) erfolgt, wenn die durch diesen zweiten Photoempfänger (34) detektierte Lichtstärke einen im Voraus definierten Schwellenwert überschreitet.

2. Kommunikationsverfahren nach Anspruch 1, wobei die ersten Sendemittel Folgendes umfassen:
- eine erste Leuchte (20) zum Senden von Lichtsignalen (26) gemäß einer Li-Fi-Technik,
- erste Mittel (22) zum Codieren digitaler Daten in ein elektrisches Signal,
- erste Mittel (24) zum Steuern der ersten Sendeleuchte (20), die das elektrische Signal in ein Lichtsignal (26) umsetzen können, indem sie die Lichtquelle der ersten Sendeleuchte (20) steuern.

3. Kommunikationsverfahren nach Anspruch 2, wobei die erste Sendeleuchte (20) an einem Ende des Schienenfahrzeugs (12) angeordnet ist und außerdem eine Beleuchtungsfunktion erfüllt.

4. Kommunikationsverfahren nach Anspruch 2 oder 3, wobei die erste Sendeleuchte (20) wenigstens eine Leuchtdiode enthält.

5. Kommunikationsverfahren nach einem der vorhergehenden Ansprüche, wobei die Kommunikationsvorrichtung (18) einen ersten Photoempfänger (28), erste Mittel (30) zum Umsetzen von von dem Photoempfänger empfangenen Lichtsignalen in elektrische Signale und erste Mittel (32) zum Decodieren der elektrischen Signale in digitale Daten umfasst.

6. Kommunikationsverfahren nach einem der vorhergehenden Ansprüche, wobei das Kommunikationsendgerät (14) Mittel (40) zum Speichern digitaler Daten enthält.

## Claims

1. Communication method by means of a system for data communication (10) between a railway vehicle (12) and a communication terminal (14) which is external to the railway vehicle (12), in which:
- the railway vehicle (12) comprises a device (18) for data communication with the communication terminal (14), the device for data communication (18) comprising first means (20, 22, 24) for transmitting light signals (26) according to a Li-Fi technology,
- the communication terminal (14) comprises a second photoreceiver (34), second means (36) for conversion of light signals received by the second photoreceiver (34) into electrical signals, and second means (38) for decoding the electrical signals into numerical data.
- the communication terminal (14) comprises second means (42, 44, 46) for transmission of light signals according to a Li-Fi technology,
the communication method comprising:
- the arrival of the railway vehicle (12) in the vicinity of the communication terminal (14),
- the transmission of light signals (26) by the first transmission means (20, 22, 24),
- receipt of the light signals (26) by the second photoreceiver (34),
- conversion of the light signals received by the second photoreceiver (34) into electrical signals, and
- decoding of the electrical signals into numerical data,
**characterised in that** the method comprises, following the arrival of the railway vehicle (12) in the vicinity of the communication terminal (14),
and prior to the transmission of light signals (26) by the first transmission means (20, 22, 24), detection of the railway vehicle (12) by the communication terminal (14), this detection of the railway vehicle being produced by means of the second photoreceiver (34) when the light intensity detected by this second photoreceiver (34) exceeds a predefined threshold.

2. Communication method according to claim 1, in which the first transmission means comprise:
- a first lamp (20) for transmission of light signals (26) according to a Li-Fi technology,
- first means (22) for encoding numerical data into an electrical signal,
- first means (24) for controlling the first transmission lamp (20), which are able to convert the electrical signal into a light signal (26) by controlling the light source of the first transmission lamp (20).

3. Communication method according to claim 2, in which the first transmission lamp (20) is arranged at one end of the railway vehicle (12) and fulfils, in addition, a lighting function.

4. Communication method according to claim 2 or 3, in which the first transmission lamp (20) comprises at least one electroluminescent diode.

5. Communication method according to any of the preceding claims, in which the communication device (18) comprises a first photoreceiver (28), first means (30) for conversion of light signals received by the photoreceiver into electrical signals, and first means (32) for decoding the electrical signals into numerical data.

6. Communication method according to any of the preceding claims, in which the communication terminal (14) comprises means (40) for storing numerical data.
